# EUROPEAN PATENT SPECIFICATION

(11) **EP 4 001 345 B1**
(45) Date of publication and mention of the grant of the patent: **01.04.2026**
(21) Application number: 20839918.8
(22) Date of filing: 17.07.2020
(51) Int. Cl.: C08G 83/00, C09D 5/16, C08F 2/38, C08F 216/16, C08F 220/00

(54) **DEGRADABLE HYPERBRANCHED RESIN, PREPARATION METHOD THEREFOR, AND USE THEREOF**
ABBAUBARES HYPERVERZWEIGTES HARZ, HERSTELLUNGSVERFAHREN DAFÜR UND VERWENDUNG DAVON
RÉSINE HYPERRAMIFIÉE DÉGRADABLE, SON PROCÉDÉ DE PRÉPARATION ET UTILISATION ASSOCIÉE

(30) Priority: 18.07.2019 CN 201910650454
(43) Date of publication of application: 25.05.2022
(73) Proprietor: South China University of Technology, Guangzhou, Guangdong 510640 (CN)
(72) Inventor: ZHANG, Guangzhao, Guangzhou, Guangdong 510640 (CN); MA, Chunfeng, Guangzhou, Guangdong 510640 (CN); PAN, Jiansen, Guangzhou, Guangdong 510640 (CN); XIE, Qingyi, Guangzhou, Guangdong 510640 (CN)
(74) Representative: Schulz Junghans Patentanwälte PartGmbB
(86) International application number: PCT/CN2020/102627
(87) International publication number: WO 2021/008602

(56) References cited:
- WO-A1-2017/222473
- WO-A1-2018/067838
- WO-A1-2018/188488
- WO-A1-2018/196542
- WO-A1-2020/201273
- WO-A2-2004/085712
- CN-A- 102 369 243
- CN-A- 103 666 375
- CN-A- 110 540 652
- US-A1- 2016 185 913
- LI RSC ET AL: "Polymer Chemistry Main-chain degradable star polymers comprised of pH-responsive hyperbranched cores and thermoresponsive polyethylene glycol-based coronas", 13 September 2018 (2018-09-13), pages 4801 - 4918, XP093050634, Retrieved from the Internet <URL:https://pubs.rsc.org/en/content/articlepdf/2018/py/c8py01113c>
- BUTUN ET AL: "Selective betainization of 2-(dimethylamino)ethyl methacrylate residues in tertiary amine methacrylate diblock copolymers and their aqueous solution properties", POLYMER, ELSEVIER, AMSTERDAM, NL, vol. 44, no. 24, 1 November 2003 (2003-11-01), pages 7321 - 7334, XP027124827, ISSN: 0032-3861, [retrieved on 20031016]
- YANDI WETRA ET AL: "Antialgal activity of poly(2-(dimethylamino)ethyl methacrylate) (PDMAEMA) brushes against the marine alga Ulva", BIOFOULING: THE JOURNAL OF BIOADHESION AND BIOFILM RESEARCH, vol. 33, no. 2, 7 February 2017 (2017-02-07), GN, pages 169 - 183, XP093050984, ISSN: 0892-7014, DOI: 10.1080/08927014.2017.1281409

## Description

### Technical field

The present invention belongs to the technical field of a marine antifouling material, specifically relates to a degradable hyperbranched resin and preparation method therefor and use thereof.

### Background

Issues of marine biological fouling may cause huge economic losses and hidden safety hazards, and therefore marine antifouling is a subject closely related to major national needs like the environment, energy, national defense and so on, and is of great significance. At present, coating a marine antifouling paint is the most economical, the most convenient and commonly used method to solve the problem of marine biological fouling. The mainstream technology of self-polishing resin is represented by polysilyl acrylate, poly(zinc acrylate) and poly(copper acrylate) resins, all of which are side-chain hydrolysis type, and exhibition of whose performances has certain requirements on the ratio of port time to sea time and ship speed. In the stationary phase, it is difficult to achieve the ideal self-polishing effect only by the scouring of sea water. More importantly, this kind of resin has no function and can only rely on the release of an antifouling agent to inhibit and kill fouling organisms. The instability of polishing leads to the antifouling agent being released discontinuously, and therefore the static antifouling effect is not good. Not only that, while it is difficult for the hydrolyzed polymer to break away from the coating surface to increase the swellability of the coating, the main chain cannot be degraded in the sea environment, and its dispersion in the ocean may cause microplastic pollution, which will seriously threaten the safety of the marine ecosystem.

The focus of current research is on how to impart multifunctionality to the antifouling resin to enhance its antifouling function, for example, introducing a polyester structure into the polymer backbone to impart degradability, such as Chinese patent publication CN 103396513, a preparation method and an application for a main-chain-breaking type polysilyl acrylates resin; Chinese patent publication CN 107056990, a main chain degradable poly(zinc acrylate) resin prepared by a monomer method and preparation method and application therefor; Chinese patent publication CN 106986969A, a main chain degradable poly(copper acrylate) resin and preparation method and application therefor; grafting functional monomers which have antifouling groups with fouling resistance properties or are capable of inducing autogenous zwitterions and so on. However, the implementations of the above technologies are all based on traditional straight-chain type polymer resins, which still cannot well make the hydrolyzed resin break away from the coating surface in time, realize controllable self-polishing, and satisfy the static antifouling requirements in the sea area with great fouling pressure The article by Wais U., et al., entitled "Main-chain degradable star polymers comprised of pH-responsive hyperbranched cores and thermoresponsive polyethylene glycol-based coronas", Polymer Chemistry, 2018, 9, pages 4801-4918, describes a hyperbranched polymer obtained by a two-step polymerisation method wherein in a first step di(ethylene glycol) dimethacrylate, 2-methylene-1,3-dioxepane, 2-(diethylamino)ethyl methacrylate are polymerized to prepare hyperbranched cores, which are then further functionalized with oligoethylene glycol methacrylate units, constituting the polyethylene glycol-based coronas.

WO 2018/196542 A1 and WO 2018/188488 A1 disclose a self-polishing zwitterionic antifouling resin having main chain degradability, obtained by the copolymerization of an ethylene reactive monomer, a ketene acetal monomer and a betaine type precursor.

### Summary

In order to overcome defects and shortcomings of the prior art, a primary object of the present invention is to provide a degradable hyperbranched resin. The resin may not only satisfy marine static antifouling requirements but also avoid causing marine microplastic pollution at the same time.

Another object of the present invention is to provide a preparation method for the above-described degradable hyperbranched resin.

Yet another object of the present invention is to provide a use of the above-described degradable hyperbranched resin in the marine antifouling field.

The object of the present invention is realized by the following technical solution:
a degradable hyperbranched resin, characterized by a structure of a hyperbranched random copolymer wherein monomers of the hyperbranched random copolymer consist of a vinyl antifouling functional monomer, a di functional monomer, a vinyl monomer and a polyester segment derived from a cyclic monomer and in that, prepared from the following components in terms of parts by weight:

| | |
|---|---|
| a cyclic monomer | 1 to 100 parts, |
| a vinyl antifouling functional monomer | 0 to 60 parts, |
| a difunctional monomer | 0 to 60 parts, |
| a vinyl monomer | 0 to 70 parts, |
| an initiator | 1 to 20 parts, |
| a chain transfer agent | 0.5 to 10 parts, and |
| an organic solvent | 50 to 150 parts. |

Preferably, the degradable hyperbranched resin is prepared from the following components in terms of parts by weight:

| | |
|---|---|
| the cyclic monomer | 30 to 70 parts, |
| the vinyl antifouling functional monomer | 20 to 50 parts, |
| the difunctional monomer | 0 to 30 parts, |
| the vinyl monomer | 0 to 40 parts, |
| the initiator | 3 to 13 parts, |
| the chain transfer agent | 2 to 5 parts, and |
| the organic solvent | 100 to 110 parts. |

The cyclic monomer is at least one of the following compounds (12) and (19) to (38): (12) 2,2-dimethyl trimethylene cyclic carbonate, (19) 2-methylene-1,3-dioxolane, (20) 2-methylene-4-phenyl-1,3-dioxolane, (21) 2-methylene-4-alkyl-1,3-dioxolane, (22) 2,4-dimethylene-1,3-dioxolane, (23) 2-methylene-1,3-dioxo-4,5-benzocyclopentane, (24) 2-methylene-1,3-dioxane, (25) 2,5-dimethylene-1,3-dioxane, (26) 2-methylene-5-phenyl-1,3-dioxane, (27) 2-methylene-4-alkyl-1,3-dioxane, (28) 2-methylene-1,3-dioxepane, (29) 2-methylene-5-alkyl-1,3-dioxepane, (30) 2-methylene-4,7-dimethyl-1,3-dioxepane, (31) 2-methylene-1,3-dioxo-5,6-benzocycloheptane, (32) 2-methylene-5-phenyl-1,3-dioxepane, (33) 2-ethylidene-1,3-dioxepane, (34) 2-methylene-1,3-dioxo-5-cycloheptene, (35) 2-ethylidene-4-alkyl-1,3-dioxolane, (36) 2-ethylidene-1,3-dioxane, (37) 2-allylidene-4-phenyl-1,3-dioxolane and (38) 2-ethylidene-1,3-dioxo-5,6-benzocycloheptane;
the structural formulae of the compounds (12) and (19) to (38) are as followed:

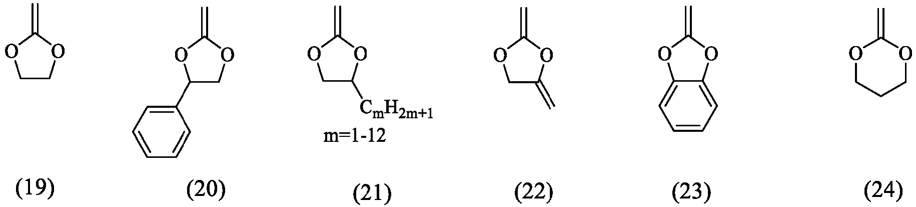

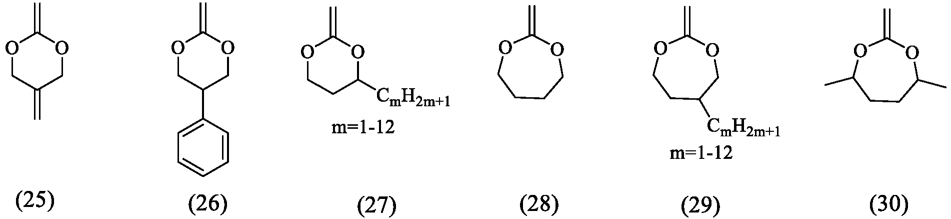

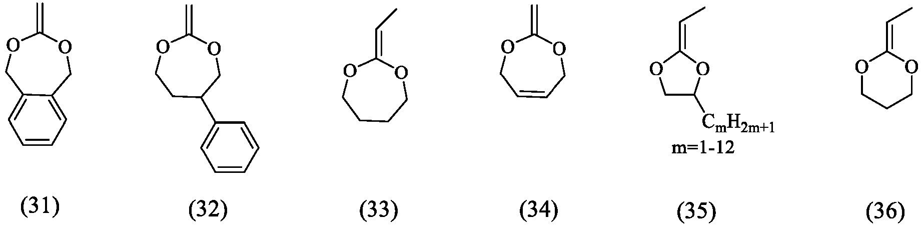

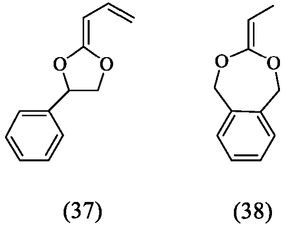

The vinyl antifouling functional monomer is at least one of a vinyl silane ester monomer, a vinyl zinc ester monomer, a vinyl copper ester monomer and a precursor of betaine type zwitterion.

Wherein, the vinyl silane ester monomer is at least one of acryloxy trimethyl silane, trimethylsilyl methacrylate, acryloxytriethyl silane, triethylsilyl methacrylate, acryloxy triisopropyl silane, triisopropylsilyl methacrylate, acryloxy triphenyl silane, triphenylsilyl methacrylate, acryloxy tri-n-butyl silane, tri-n-butyl silyl methacrylate, acryloxy t-butyldimethyl silane, t-butyldimethyl silyl methacrylate, acryloxy bis(trimethyl siloxanyl) methyl silane and bis(trimethyl siloxanyl) methyl silyl methacrylate.

The vinyl zinc ester monomer or vinyl copper ester monomer is prepared by the following method: taking a solvent as a reaction medium, and reacting a zinc-containing compound or a copper-containing compound, (meth) acrylic acid and a monocarboxylic acid in a molar ratio of (0.9 to 1.1):1:(1 to 1.2) at 50 to 140 °C for 3 to 8 hours. Preferably, a mixture of 1 part by mole of (meth) acrylic acid and (1 to 1.2) parts by mole of monocarboxylic acid is added dropwise into a mixture of (0.9 to 1.1) parts by mole of the zinc-containing compound or the copper-containing compound and solvent at a uniform velocity within 1 to 4 hours at 50 to 140 °C, and reacting is carried out for 2 to 4 hours upon keeping the temperature. More preferably, the reacting temperature is preferably 75 to 130 °C; the molar ratio of the (meth) acrylic acid, the zinc-containing compound or the copper-containing compound and the monocarboxylic acid is 1:1:1; and the molar ratio of the (meth) acrylic acid, the copper-containing compound and the monocarboxylic acid is 1:1:1. The obtained vinyl zinc ester monomer or vinyl copper ester monomer in a mixed solution of a product has a solid content of 40 to 60%;
wherein, the zinc-containing compound is preferably at least one of zinc oxide, zinc hydroxide, zinc chloride, zinc acetate and zinc propionate; the copper-containing compound is preferably at least one of copper oxide, copper hydroxide, copper chloride, copper acetate and copper propionate. The monocarboxylic acid is preferably at least one of formic acid, acetic acid, propanoic acid, benzoic acid, n-caprylic acid, isocaprylic acid, stearic acid, isostearic acid, naphthenic acid, itaconic acid, maleic acid, oleic acid, palmitic acid and rosin acid. The solvent is preferably at least one of hydrocarbons solvent, alcohols solvent and water; and is more preferably at least one of toluene, xylene, isopropanol, n-butanol, isobutanol and propylene glycol methyl ether.

The general structural formula of the precursor of betaine type zwitterion is shown as the following formula: 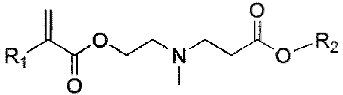 wherein, R₁ represents H or CH₃, R₂ represents alkyl having a number of carbon atoms of 1 to 12 (straight chain, branched chain, or cyclic), methoxy-terminated polyethylene glycol group (n=2 to 24) or an antifouling group.

The antifouling group is at least one of an organic antifouling group, a zinc-containing antifouling group, a copper-containing antifouling group and a silicon-containing antifouling group.

The organic antifouling group is one of monovalent groups having isothiazolinones, triclosan, paeonol, camptothecin, N-(2,4,6-trichloro phenyl) maleimide, bromopyrrole nitrile, donaxine, capsaicin or hydroxyindoles compounds as a main structure; the zinc-containing antifouling group is: 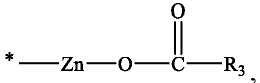 wherein R₃ is saturated or unsaturated alkyl or cycloalkyl having a number of carbon atoms of 1 to 12, "*" represents a connection site; the copper-containing antifouling group R₂ is: 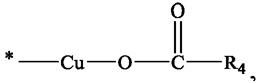 wherein R₄ is saturated or unsaturated alkyl or cycloalkyl having a number of carbon atoms of 1 to 12, "*" represents a connection site; and the silicon-containing antifouling group R₂ is: 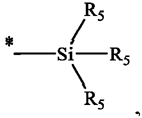 wherein R₅ is alkyl having a number of carbon atoms of 1 to 8, "*" represents a connection site.

A preparation method for the precursor of betaine type zwitterion is: subjecting equimolar acrylate containing R₂ group and 2-(methylamino) ethanol to Michael addition reaction at 0 to 50 °C, and thereafter subjecting the resultant as well as equimolar (meth) acrylic chloride to an acylation reaction at 0 to 30 °C, to obtain the precursor of betaine type zwitterion;
the difunctional monomer is preferably a functional monomer with vinyl groups at both terminals; and is more preferably at least one of (meth)acrylates, (meth)acrylates containing a metallic element, aliphatic polyesters with vinyl groups at both terminals, Schiff bases and compounds containing disulfide bonds.

Wherein, the (meth)acrylates are preferably at least one of 3-(acryloxy)-2-hydroxy propyl acrylate, 3-(acryloxy)-2-hydroxy propyl methacrylate, polyethylene glycol diacrylate (degree of polymerization n being 1 to 24), polyethylene glycol dimethacrylate (degree of polymerization n being 1 to 24), polypropylene glycol diacrylate (degree of polymerization n being 1 to 24), polypropylene glycol dimethacrylate (degree of polymerization n being 1 to 24), 1,4-butylene glycol diacrylate, 1,4-butylene glycol dimethacrylate, 1,6-hexylene glycol diacrylate, 1,6-hexylene glycol dimethacrylate, 1,9-nonylene glycol diacrylate, 1,9-nonylene glycol dimethacrylate, 1,10-decylene glycol diacrylate, 1,10-decylene glycol dimethacrylate, neopentyl glycol diacrylate, neopentyl glycol dimethacrylate, ethoxylated bisphenol A diacrylate (degree of polymerization n being 1 to 24), ethoxylated bisphenol A dimethacrylate (degree of polymerization n being 1 to 24), ethoxylated bisphenol fluorene diacrylate (degree of polymerization n being 1 to 24), ethoxylated bisphenol fluorene dimethacrylate (degree of polymerization n being 1 to 24), tricyclodecane dimethanol diacrylate, tricyclodecane dimethanol dimethacrylate and bisphenol A glycerol dimethacrylate. The (meth)acrylates containing the metallic element are preferably at least one of magnesium acrylate, magnesium methacrylate, magnesium acrylate methacrylate, manganese acrylate, manganese methacrylate, manganese acrylate methacrylate, zinc acrylate, zinc methacrylate, zinc acrylate methacrylate, copper acrylate, copper methacrylate, copper acrylate methacrylate, iron acrylate, iron methacrylate, and iron acrylate methacrylate. The aliphatic polyesters with vinyl groups at both terminals are preferably at least one of polyprolylene carbonate with vinyl groups at both terminals, polytrimethylene carbonate with vinyl groups at both terminals, poly(trimethylene carbonate-caprolactone) with vinyl groups at both terminals, poly(caprolactone-glycolide) with vinyl groups at both terminals, poly(caprolactone-lactide) with vinyl groups at both terminals, poly(caprolactone-ethylene glycol) with vinyl groups at both terminals, poly(lactide-glycolide) with vinyl groups at both terminals, poly(lactide-ethylene glycol) with vinyl groups at both terminals, poly 3-hydroxy butyrate with vinyl groups at both terminals, poly(3-hydroxy butyrate-co-3-hydroxy valerate) with vinyl groups at both terminals, polyethylene glycol adipate with vinyl groups at both terminals, polydiethylene glycol adipate with vinyl groups at both terminals, polybutylene glycol adipate with vinyl groups at both terminals, polyhexylene glycol adipate with vinyl groups at both terminals, polybutylene glycol succinate with vinyl groups at both terminals, polyorthoesters with vinyl groups at both terminals, polyanhydrides with vinyl groups at both terminals, polyphosphate with vinyl groups at both terminals, polycaprolactone with vinyl groups at both terminals, polylactide with vinyl groups at both terminals and polyglycolide with vinyl groups at both terminals; and molecular weights of the aliphatic polyesters with vinyl groups at both terminals are all preferably 1×10² to 5×10³ g/mol, and are more preferably 3×10² to 2×10³ g/mol.

The structures of the schiff bases and the compounds containing disulfide bonds are shown as followed:

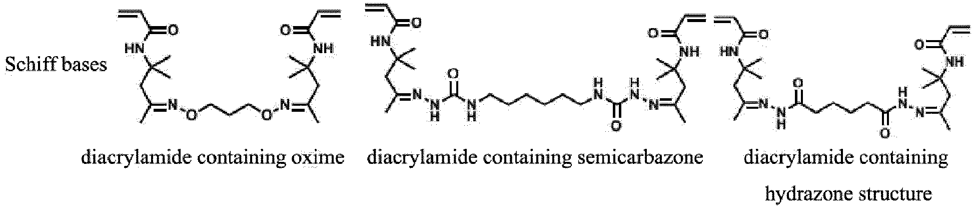

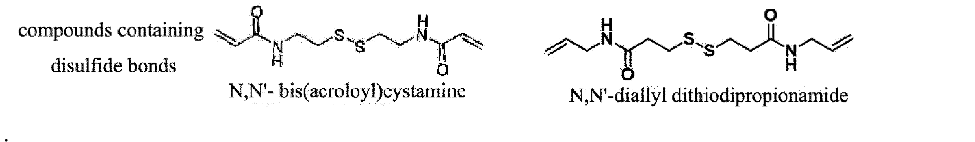

The vinyl monomer is preferably at least one of (meth)acrylates, (meth)acrylates containing a terminal hydroxyl group, cyclic hydrocarbon (meth)acrylates and polyolefin glycol (meth)acrylate.

The vinyl monomer of the (meth)acrylates are preferably at least one of methyl acrylate, ethyl acrylate, 2-methoxy ethyl acrylate, propyl acrylate, isopropyl acrylate, n-butyl acrylate, isobutyl acrylate, t-butyl acrylate, n-octyl acrylate, isooctyl acrylate, lauryl acrylate, octadecyl acrylate, methyl methacrylate, ethyl methacrylate, 2-methoxy ethyl methacrylate, propyl methacrylate, isopropyl methacrylate, n-butyl methacrylate, isobutyl methacrylate, t-butyl methacrylate, n-octyl methacrylate, isooctyl methacrylate, lauryl methacrylate and octadecyl methacrylate. The (meth)acrylates containing a terminal hydroxyl group are preferably at least one of hydroxyethyl acrylate, hydroxypropyl acrylate, hydroxyethyl methacrylate and hydroxypropyl methacrylate. The cyclic hydrocarbon (meth)acrylates are preferably at least one of phenyl acrylate, cyclohexyl acrylate, 1-methylcyclohexyl acrylate, 4-t-butylcyclohexyl acrylate, phenyl methacrylate, cyclohexyl methacrylate, 1-methylcyclohexyl methacrylate and 4-t-butyl cyclohexyl methacrylate. The polyolefin glycol (meth)acrylates are preferably at least one of polyethylene glycol monoacrylate, polypropylene glycol monoacrylate, polyethylene glycol methacrylate and polypropylene glycol methacrylate; and the polyolefin glycol (meth)acrylates all have a degree of polymerization of 1 to 10.

The initiator is preferably at least one of phosphonitrile, phosphonitrile salt, phosphonitrile oxide, azobisisobutyronitrile, azobisisovaleronitrile, benzoyl peroxide, di-t-butyl peroxide and t-butyl peroxy-2-ethylhexanoate.

The chain transfer agent is preferably at least one of thiol, dithioester, trithioester and methyl styrene dimer (i.e. 2,4-diphenyl-4-methyl-1-pentene).

Wherein, the mercaptan is preferably at least one of n-dodecyl mercaptan, t-dodecyl mercaptan, mercapto ethanol, mercapto acetic acid, isooctyl 3-mercapto propionate, 2-ethyl hexyl 3-mercapto propionate and pentaerythritol tetra(3-mercapto propionate). The dithioester is preferably at least one of cumenyl dithiobenzoate, 2-cyano isopropyl dithiobenzoate, methyl dithiobenzoate, phenethyl dithiobenzoate, benzyl dithiobenzoate, phenethyl dithiophenylacetate, S-(thiobenzoyl) thioglycolic acid, S-acetonyl-O-ethyl dithiocarbonate, S-vinyl propionate-O-ethyl dithiocarbonate, 2-cyanopropyl-4-cyano dithiobenzoate, 2-cyanopropyl-N-methyl-N-(4-pyridine) amino dithiocarbonate, methyl-2-[methyl(4-pyridine) dithiocarbonate] propionate, 4-cyano-4-(thiobenzoyl) pentanoic acid, cyanomethyl methyl(phenyl) carbamodithioate, 2-phenylpropyl-2-dithiobenzene, 1-cyano-1-methyl-4-oxo-4-(2-thio-3-thiazole alkyl) butyl ester, bis(thiobenzoyl) dithioether, tetramethylthiuram disulfide, diethyl xanthogen disulfide, diisopropyl xanthogen disulfide, di-n-butyl xanthogen disulfide and diisobutyl xanthogen disulfide. The trithioester is preferably at least one of 2-cyano-2-propyldodecyl trithiocarbonate, dibenzyl trithiocarbonate, S-cyanomethyl-S-dodecyl trithiocarbonate, 4-cyano-4-(dodecylsulfanylthiocarbonyl)sulfanylpentanoic acid, bis(carboxymethyl) trithiocarbonate, methyl 2-[[(dodecyl mercapto) thiomethyl]thio]-2-methylbenzoate, 2-(((dodecylthio)carbonothioyl)thio)-2-methyl propionic acid and dimethyl trithiocarbonate.

The organic solvent in the degradable hyperbranched resin ingredients is preferably at least one of hydrocarbons solvent, alcohols solvent, ketones solvent and esters solvent; and is more preferably at least one of tolyene, xylene, iso-propanol, n-butanol, isobutanol, propylene glycol methyl ether, methyl ethyl ketone, methyl isobutyl ketone, acetone, butanone, cyclohexanone, ethyl acetate and butyl acetate.

The degradable hyperbranched resin of the present invention has a structure which is a hyperbranched random copolymer consisting of a vinyl antifouling functional monomer, a difunctional monomer, a vinyl monomer and a polyester segment. When the vinyl antifouling functional monomer is the vinyl silane ester monomer, the product is degradable hyperbranched silicon-based self-polishing resin; when the vinyl antifouling functional monomer is the vinyl zinc ester monomer, the product is degradable hyperbranched zinc-based self-polishing resin; when the vinyl antifouling functional monomer is the vinyl silyl copper ester monomer, the product is degradable hyperbranched copper-based self-polishing resin; and when the vinyl antifouling functional monomer is the precursor of betaine type zwitterion, the product is degradable hyperbranched self-polishing resin self-generating zwitterion.

The degradable hyperbranched silicon-based self-polishing resin has a silicon element content of 1% to 15%, preferably 3% to 8%; the degradable hyperbranched zinc-based self-polishing resin has a zinc element content of 0.5% to 20%, preferably 3% to 10%; the degradable hyperbranched copper-based self-polishing resin has a copper element content of 1% to 20%, preferably 5% to 15%; and the degradable hyperbranched silicon/zinc/copper-based self-polishing resin has an acid value of 30 to 350 mg KOH/g, preferably 50 to 250 mg KOH/g.

The degradable hyperbranched resin has a number-average molecular weight *M*ₙ (taking polystyrene as a standard sample, measured by GPC) of 1000 to 10000, preferably 2000 to 6000.

A preparation method for the above-described degradable hyperbranched resin includes the following steps:
under an inert gas or a nitrogen gas atmosphere, under the action of an initiator and a chain transfer agent, taking an organic solvent as a reaction medium, and reacting a vinyl antifouling functional monomer, a difunctional monomer, a cyclic monomer and a vinyl monomer at 70 to 120 °C for 8 to 24 hours, to obtain a degradable hyperbranched resin.

When the vinyl antifouling functional monomer is the vinyl silane ester monomer, a hyperbranched silicon-based self-polishing resin is obtained; when the vinyl antifouling functional monomer is the vinyl zinc ester/copper ester monomer, a degradable hyperbranched zinc/copper-based self-polishing resin is obtained; and when the vinyl antifouling functional monomer is the precursor of betaine type zwitterion, a degradable hyperbranched self-polishing resin self-generating zwitterions is obtained.

Synthesis method of the degradable hyperbranched silicon-based self-polishing resin is preferably: under inert gas or nitrogen gas atmosphere and at 70 to 120 °C, taking an organic solvent as a reaction medium, adding dropwise a mixture consisting of vinyl silane ester monomer, a difunctional monomer, a cyclic monomer, a vinyl monomer, an initiator and a chain transfer agent at a uniform velocity within 4 to 8 hours, then reacting the same for 0 to 4 hours upon keeping the temperature, further adding an initiator at a uniform velocity within 0.5 to 1 hours, and continuing the reaction for 1.5 to 4 hours, to obtain a degradable hyperbranched silicon-based self-polishing resin;
when the vinyl antifouling functional monomer is the vinyl silane ester monomer, a hyperbranched silicon-based self-polishing resin is obtained; when the vinyl antifouling functional monomer is the vinyl zinc ester/copper ester monomer, a degradable hyperbranched zinc/copper-based self-polishing resin is obtained; and when the vinyl antifouling functional monomer is the precursor of betaine type zwitterion, a degradable hyperbranched self-polishing resin self-generating zwitterions is obtained.

The above-described degradable hyperbranched resin is used in marine antifouling.

The use is preferably to prepare a marine antifouling paint using the above-described degradable hyperbranched resin.

Compared with the prior art, the present invention has the following advantages and beneficial effects:
(1) The present invention introduces a difunctional monomer and a chain transfer agent during polymerization process, changes a traditional straight chain type high molecular antifouling resin into a hyperbranched structure and uses it in marine antifouling field for the first time.
(2) The difunctional monomer used in the present invention contains chemical bonds which are capable of breaking, and therefore branch points of the prepared hyperbranched resin can likewise break under the attack of seawater. The polyester chain segment is also degrading at the same time, and the product after degrading of the degradable hyperbranched resin has a smaller molecular weight than that of the degradable antifouling resin containing ester bonds in the main chain under the synergistic action of both the breakage and the degradation, which can be easily absorbed by the environment. Moreover, the molecular weights of the fragments can be further reduced by increasing the contents of the cyclic monomer and the difunctional monomer, and marine microplastic pollution can be effectively avoided.
(3) The degradable hyperbranched resin prepared in the present invention has a side chain with silane ester bonds/zinc ester bonds/copper ester bonds/precursor of betaine type zwitterion, which can be hydrolyzed in seawater, and may further accelerate a hydrolyzation and degradation rate of the material in a synergetic effect together with the branch point-breaking and the degradation of the polyester chain segment. It can realize rapid polishing even in a static seawater, avoid or inhibit an adhesion of fouling organisms, thereby solve the problem of dependence of a traditional self-polishing material on a navigational speed, and satisfy static antifouling requirements at sea areas with high fouling pressure.
(4) Wherein, the degradable hyperbranched silicon-based self-polishing resin has drag reduction function; and zinc/copper ions generated by hydrolyzation of the degradable hyperbranched zinc/copper-based self-polishing resin also have a certain antifouling effect, guaranteeing effective concentrations of active substances on surfaces of ships or marine equipments, and better satisfying antifouling requirement for the facilities like ships with a low navigational speed, offshore oil production platforms and so on. The degradable hyperbranched resin self-generating zwitterions can release antifouling groups by hydrolyzation action, and the zwitterions generated after hydrolyzation of coating surface impart anti-protein role to the material at the same time, which further enhance antifouling capability of the material, realizing the object of synergetic antifouling with antifouling agent and anti-protein; due to hydrophilic zwitterions are only transformed on the coating surfaces, and therefore defects of the traditional zwitterionic materials, such as great swelling property, poor mechanical property and so on, are overcome.
(5) The present invention regulates glass transition temperature and mechanical property of the material by adding different kinds and different content of a vinyl monomer or a difunctional monomer during the polymerization process, and improves the solubility of the material in a solvent conventionally used in a marine paint at the same time.
(6) The degradable hyperbranched resin provided by the present invention has advantages of high solid content and low viscosity, may reduce the amount of the solvent in the antifouling paint, thereby reduce VOC; moreover, the preparation method is simple and feasible, lower in cost, suitable for industrial production, and has very good development prospect at the marine antifouling paint field.

### Detailed description of embodiments

The present invention will be further described below in detail in conjunction with examples, but embodiments of the present invention are not limited thereto.

In examples of the present application, for an adhesion test, reference is made to ISO 2409-2007 "Paints and Varnishes--Cross cut test"; for a hanging panel experiment, reference is made to GB/T 5370-2007 "Method for testing antifouling panels in shallow submergence"; for a drag reduction performance test, reference is made to GB/T 7791-2014 "Test method for performance of reducing frictional resistance of antifouling coatings". In examples of the present application, for an experimental process of testing release rate of a natural antifoulant (5-octyl-2-furanone), reference is made to Ma C, Zhang W, Zhang G, et al. Environmentally friendly anti-fouling coatings based on biodegradable polymer and natural antifoulant [J]. ACS Sustainable Chemistry & Engineering, 2017, 5: 6304-6309. In examples of the present application, for an experimental process of anti-protein adsorption test, reference is made to Ma J, Ma C, Zhang G. Degradable Polymer with protein Resistance in a marine Environment [J]. Langmuir, 2015, 31(23): 6471-6478.

In examples of the present application, for a preparation method for S-vinyl propionate-O-ethyl dithiocarbonate, reference is made to Schmitt J, Blanchard N, Poly J. Controlled synthesis of branched poly(vinyl acetate)s by xanthate-mediated RAFT self-condensing vinyl (co)polymerization [J]. Polymer Chemistry, 2011, 2(10): 2231.

In examples of the present application, S-cyanomethyl-S-dodecyl trithiocarbonate is purchased from Zhengzhou JACS Chem Product co., Ltd.; and 2-ethyl hexyl 3-mercapto propionate is purchased from Bailingwei Technology co., Ltd.

In examples of the present application, polyglycolide with vinyl groups at both terminals is prepared by reacting polyglycolide with hydroxy groups at both terminals and acryloyl chloride in a molar ratio of 1:2 at 0 °C for 12 hours.

In examples of the present application, polycaprolactone with vinyl groups at both terminals is prepared by reacting polycaprolactone with hydroxy groups at both terminals and acryloyl chloride in a molar ratio of 1:2 at 0 °C for 12 hours.

In examples of the present application, poly(caprolactone-lactide) with vinyl groups at both terminals is prepared by reacting poly(caprolactone-lactide) with hydroxy groups at both terminals and acryloyl chloride in a molar ratio of is 1:2 at 0 °C for 12 hours.

In examples of the present application, for a preparation method for diacrylamide containing oxime/semicarbazone/hydrazone structure, reference is made to Sims M B, Patel K Y, Bhatta M, et al. Harnessing Imine Diversity To Tune Hyperbranched Polymer Degradation [J]. Macromolecules, 2018, 51: 356-363.

### Example 1

Under a condition of stirring, 50 g xylene and 40 g butyl acetate were added into a reacting vessel; the temperature was increased to 100 °C under nitrogen gas atmosphere; a mixture consisting of 40 gacryloxy triisopropyl silane (purchased from Bailingwei Technology co., Ltd.), 30 g polyorthoester with vinyl groups at two terminals having a molecular weight of 600 g/mol, 30 g 2-methylene-1,3-dioxo-4,5-benzo cyclopentane, 1 g azobisisobutyronitrile, 8 g bis(thiobenzoyl) dithioether and 10 g butyl acetate was added dropwise at a uniform velocity within 5 hours; after adding dropwise was finished, the temperature was kept for 2 hours; 2 g benzoyl peroxide and 10 g xylene were then added dropwise at a uniform velocity within 30 minutes; and stirring was performed for 4 hours, to obtain a degradable hyperbranched silicon-based self-polishing resin.

In the present example, the degradable hyperbranched silicon-based self-polishing resin has a number-average molecular weight Mn of 6.5×10³ g/mol, a silicon content of 4.9%, and an acid value of 98 mg KOH/g. Paint film thereof has an adhesion of 1 grade, and a drag reducing rate of 4.0%. A varnish was prepared by compounding the hyperbranched silicon-based self-polishing resin with 10 wt% 5-octyl-2-furanone, and a release rate of 5-octyl-2-furanone in the varnish measured by High Performance Liquid Chromatography was 23 µg·cm⁻²d⁻¹. In the East Sea area of China, a hanging panel test in shallow sea was carried out, and the fouling evaluation was 93 points after 10 months.

### Example 2

Under a condition of stirring, 70 g propylene glycol methyl ether and 10 g ethyl acetate were added into a reacting vessel; the temperature was increased to 100 °C under nitrogen gas atmosphere; a mixture consisting of 10 g acryloxy t-butyldimethyl silane (purchased from American Momentive Co.), 10 g hydroxyethyl methacrylate, 30 g phenyl acrylate, 25 g t-butyl methacrylate, 20 g 2-methylene-1,3-dioxepane (purchased from Shanghai Aladdin Biochemical Technology Co., Ltd., CAS: 69814-56-8), 5 g diacrylamide containing hydrazone structure, 15 g t-butyl peroxy-2-ethyl hexanoate, 0.5 g pentaerythritol tetra(3-mercapto propionate) and 10 g propylene glycol methyl ether was added dropwise at a uniform velocity within 4 hours; after adding dropwise was finished, the temperature was kept for 2 hours; 1 g t-butyl peroxy-2-ethyl hexanoate and 10 g xylene were then added dropwise at a uniform velocity within 30 minutes; and stirring was performed for 2 hours, to obtain a degradable hyperbranched silicon-based self-polishing resin.

In the present example, the degradable hyperbranched silicon-based self-polishing resin has a number-average molecular weight Mn of 4.5×10³ g/mol, a silicon content of 1.5%, and an acid value of 30 mg KOH/g. Paint film thereof has an adhesion of 2 grade, and a drag reducing rate of 1.2%. A varnish was prepared by compounding the hyperbranched silicon-based self-polishing resin with 10 wt% 5-octyl-2-furanone, and a release rate of 5-octyl-2-furanone in the varnish measured by High Performance Liquid Chromatography was 15 µg·cm⁻²d⁻¹. In the East Sea area of China, a hanging panel test in shallow sea was carried out, and the fouling evaluation was 80 points after 6 months.

### Example 3

(1) Synthesis of vinyl zinc ester monomer:
   13.6 g zinc hydroxide, 50 g tolyene and 15 g isobutanol were added into a reacting vessel, and heated to 75 °C. A mixture of 9.9 g acrylic acid and 41.4g rosin acid was added dropwise at a uniform velocity within 3 hours. After adding dropwise was finished, reaction was performed upon keeping the temperature for 2 hours, and the solvent was removed by rotary evaporating to obtain a vinyl zinc ester monomer;
(2) Synthesis of degradable hyperbranched zinc-based self-polishing resin:
   Under a condition of stirring, 50 g xylene and 40 g butyl acetate were added into a reacting vessel; the temperature was increased to 100 °C under nitrogen gas atmosphere; a mixture consisting of 60 g vinyl zinc ester functional monomer, 10 g N,N'-bis(acrylyl) cystamine, 30 g 2-methylene-4,7-dimethyl-1,3-dioxepane, 3 g azobisisobutyronitrile, 8 g bis(thiobenzoyl) dithioether and 10 g butyl acetate was added dropwise at a uniform velocity within 5 hours; after adding dropwise was finished, the temperature was kept for 2 hours, 2 g benzoyl peroxide and 10 g xylene were added dropwise at a uniform velocity within30 minutes; and stirring was performed for 4 hours, to obtain a degradable hyperbranched zinc-based self-polishing resin.

In the present example, the degradable hyperbranched zinc-based self-polishing resin has a number-average molecular weight Mn of 2.5×10³ g/mol, a zinc content of 8.9 %, and an acid value of 154 mg KOH/g. Paint film thereof has an adhesion of 1 grade. A varnish was prepared by compounding the degradable hyperbranched zinc-based self-polishing resin with 10 wt% 5-octyl-2-furanone, and a release rate of 5-octyl-2-furanone in the varnish measured by High Performance Liquid Chromatography was 42 µg·cm⁻²d⁻¹. In the Bohai Sea area of China, a hanging panel test in shallow sea was carried out, and the fouling evaluation was 95 points after 12 months.

### Example 4

(1) Synthesis of vinyl zinc ester monomer:
   18.7 g acetic acid zinc, 22 g tolyene and 20 g n-butanol were added into a reacting vessel, and heated to 130 °C. A mixture of 8.8 g methacrylic acid and 14.7 g isocaprylic acid was added dropwise at a uniform velocity within 3 hours. After adding dropwise was finished, reaction was performed upon keeping the temperature for 2 hours, and the solvent was removed by rotary evaporation to obtain a vinyl zinc ester monomer;
(2) Synthesis of degradable hyperbranched zinc-based self-polishing resin:
   Under a condition of stirring, 70 g propylene glycol methyl ether, 10 g ethyl acetate were added into a reacting vessel; the temperature was increased to 100 °C under nitrogen gas atmosphere; a mixture consisting of 30 g vinyl zinc ester functional monomer, 10 g hydroxyethyl methacrylate, 30 g phenyl acrylate, 15 g 2-methylene-5-phenyl-1,3-dioxepane, 15 g diacrylamide containing hydrazone structure, 15 g t-butyl peroxy-2-ethyl hexanoate, 0.5 g pentaerythritol tetra(3-mercapto propionate) and 10 g propylene glycol methyl ether was added dropwise at a uniform velocity within 4 hours; after adding dropwise was finished, the temperature was kept for 2 hours; 1 g t-butyl peroxy-2-ethyl hexanoate and 10 g xylene were added dropwise at a uniform velocity within 30 minutes; and stirring was performed for 2 hours, to obtain a degradable hyperbranched zinc-based self-polishing resin.

In the present example, the degradable hyperbranched zinc-based self-polishing resin has a number-average molecular weight Mn of 3.8×10³ g/mol, a zinc content of 6.6%, and an acid value of 114 mg KOH/g. Paint film thereof has an adhesion of 1 grade. A varnish was prepared by compounding the hyperbranched zinc-based self-polishing resin with 10 wt% 5-octyl-2-furanone, and a release rate of 5-octyl-2-furanone in the varnish measured by High Performance Liquid Chromatography was 28 µg·cm⁻²d⁻¹. In East Sea area of China, a hanging panel test in shallow sea was carried out, and the fouling evaluation was 87 points after 11 months.

### Example 5

(1) Synthesis of vinyl copper ester monomer:
   11.8 g copper oxide, 30 g propylene glycol methyl ether and 12 g xylene were added into a reacting vessel, and heated to 80 °C. A mixture of 12.8 g methylacrylic acid and 18.1 g benzoic acid was added dropwise within 3 hours. After adding dropwise was finished, reaction was performed upon keeping the temperature for 2 hours, and the solvent was removed by rotary evaporation to obtain a vinyl copper ester monomer;
(2) Synthesis of hyperbranched copper-based self-polishing resin:
   Under a condition of stirring, 50 g xylene and 35 g propylene glycol methyl ether were added into a reacting vessel; the temperature was increased to 90 °C under nitrogen gas atmosphere; a mixture consisting of 40 g vinyl copper ester functional monomer, 40 g 2-methylene-5-phenyl-1,3-dioxane, 20 g polyanhydrides with double bonds at both terminals having a molecular weight of 800 g/mol, 8 g azobisisobutyronitrile, 2 g mercapto ethanol and 10 g xylene was added dropwise within 6 hours; after adding dropwise was finished, a mixture of 0.5 g di-t-butyl peroxide and 10 g xylene was continued to be added dropwise within 30 minutes; and stirring was performed for 2.5 hours, to obtain a degradable hyperbranched copper-based self-polishing resin.

In the present example, the degradable hyperbranched copper-based self-polishing resin has a number-average molecular weight Mn of 2.6×10³ g/mol, a copper content of 9.4%, and an acid value of 166 mg KOH/g. Paint film thereof has an adhesion of 1 grade. A varnish was prepared by compounding the degradable hyperbranched copper-based self-polishing resin with 10 wt% 5-octyl-2-furanone, and a release rate of 5-octyl-2-furanone in the varnish measured by High Performance Liquid Chromatography was 45 µg·cm⁻²d⁻¹. In Yellow Sea area of China, a hanging panel test in shallow sea was carried out, and the fouling evaluation was 93 points after 12 months.

### Example 6

Under a condition of stirring, 30 g xylene and 50 g methyl isobutyl ketone were added into a reacting vessel; the temperature was increased to 95 °C under nitrogen gas atmosphere; a mixture consisting of 100 g 2-methylene-1,3-dioxepane, 2 g azobisisobutyronitrile, 5 g S-vinyl propionate-O-ethyl dithiocarbonate, 10 g methyl isobutyl ketone was added dropwise at a uniform velocity within 8 hours; after adding dropwise was finished, the temperature was kept for 3 hours; 1 g azobisisobutyronitrile and 10 g xylene were added dropwise at a uniform velocity within 30 minutes; and stirring was performed for 4 hours, to obtain a degradable hyperbranched resin.

In the present example, the degradable hyperbranched resin has a number-average molecular weight Mn of 7.6×10³ g/mol. Paint film thereof has an adhesion of 2 grade. A varnish was prepared by compounding the degradable hyperbranched resin with 10 wt% 5-octyl-2-furanone, and a release rate of 5-octyl-2-furanone in the varnish measured by High Performance Liquid Chromatography was 22 µg·cm⁻²d⁻¹. In Yellow Sea area of China, a hanging panel test in shallow sea was carried out, and the fouling evaluation was 86 points after 8 months.

### Example 7

Under a condition of stirring, 80 g xylene was added into a reacting vessel; the temperature was increased to 90 °C under nitrogen gas atmosphere; a mixture consisting of 60 g precursor of betaine type zwitterions having R₁ group of methyl and R₂ group of camptothecin, 10 g 2,4-dimethylene-1,3-dioxolane, 20 g 3-(acryloxy)-2-hydroxy propyl acrylate, 3 g azobisisobutyronitrile, 6gbis(carboxymethyl) trithiocarbonate, and 10 g xylene was added dropwise at a uniform velocity within 6 hours; after adding dropwise was finished, the temperature was kept for 3 hours; 1 g azobisisobutyronitrile and 10 g xylene were then added dropwise at a uniform velocity within 30 minutes; and stirring was performed for 4 hours, to obtain a degradable hyperbranched self-polishing resin self-generating zwitterion.

In the present example, the degradable hyperbranched self-polishing resin self-generating zwitterion has a number-average molecular weight Mn of 5.6×10³ g/mol. Paint film thereof has an adhesion of 1 grade. An adsorption frequency for 1 mg/mL Fibrinogen measured by Quartz Crystal Microbalance with Dissipation (QCM-D) was 5 Hz. In South Sea area of China, a hanging panel test in shallow sea was carried out, and the fouling evaluation was 89 points after 12 months.

### Example 8

Under a condition of stirring, 60 g iso-propanol and 40 g ethyl acetate were added into a reacting vessel; the temperature was increased to 120 °C under nitrogen gas atmosphere; a mixture consisting of 30 g 2,2-dimethyl trimethylene cyclic carbonate, 10 g 2,2-dithio diethanol diacrylate, 50 g precursor of betaine type zwitterion having R₁ group of Hydrogen atom and R₂ group of triisopropyl silane ester, 8.5 g phosphonitrile and 3 g 2,4-diphenyl-4-methyl-1-pentene was added dropwise at a uniform velocity within 6 hours; after adding dropwise was finished, the temperature was kept for 4 hours; 1 g t-butyl peroxy-2-ethyl hexanoate and 10 g xylene were added dropwise at a uniform velocity within 30 minutes; and stirring was performed for 6 hours, to obtain a degradable hyperbranched self-polishing resin self-generating zwitterion.

In the present example, the degradable hyperbranched self-polishing resin self-generating zwitterion has a number-average molecular weight Mn of 4.3×10³ g/mol. Paint film thereof has an adhesion of 1 grade. An adsorption frequency for 1 mg/mL Fibrinogen measured by Quartz Crystal Microbalance with Dissipation (QCM-D) was 0 Hz. In Yellow Sea area of China, a hanging panel test in shallow sea was carried out, and the fouling evaluation was 90 points after 16 months.

The above-described examples are preferred embodiments of the present invention.

## Claims

1. A degradable hyperbranched resin, **characterized by** a structure of a hyperbranched random copolymer wherein monomers of the hyperbranched random copolymer consist of a vinyl antifouling functional monomer, a difunctional monomer, a vinyl monomer and a polyester segment derived from a cyclic monomer and it is prepared from the following components in terms of parts by weight:
| | |
|---|---|
| a cyclic monomer | 1 to 100 parts, |
| a vinyl antifouling functional monomer | 10 to 60 parts, |
| a difunctional monomer | 5 to 60 parts, |
| a vinyl monomer | 0 to 70 parts, |
| an initiator | 1 to 20 parts, |
| a chain transfer agent | 0.5 to 10 parts, |
| and | |
| an organic solvent | 50 to 150 parts; |
wherein the vinyl antifouling functional monomer is at least one of
• a vinyl silane ester monomer,
• a vinyl zinc ester monomer,
• a vinyl copper ester monomer and
• a precursor of betaine type zwitterion of the structure: 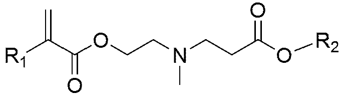
wherein R¹ represents H or CH₃, R² represents alkyl having a number of carbon atoms of 1 to 12, methoxy-terminated polyethylene glycol group or an antifouling group;
wherein the antifouling group is at least one of an organic antifouling group, a zinc-containing antifouling group, a copper-containing antifouling group and a silicon-containing antifouling group;
the organic antifouling group is one of monovalent groups having isothiazolinones, triclosan, paeonol, camptothecin, N-(2,4,6-trichloro phenyl) maleimide, bromopyrrole nitrile, donaxine, capsaicin or hydroxyindoles compound as a main structure; the zinc-containing antifouling group is: 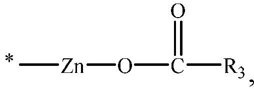 wherein R₃ is saturated or unsaturated alkyl or cycloalkyl having a number of carbon atoms of 1 to 12, "*" represents a connection site; the copper-containing antifouling group R₂ is: 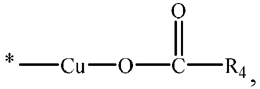 wherein R₄ is saturated or unsaturated alkyl or cycloalkyl having a number of carbon atoms of 1 to 12, "*" represents a connection site; and the silicon-containing antifouling group R₂ is: 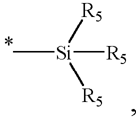 wherein R₅ is alkyl having a number of carbon atoms of 1 to 8, "*" represents a connection site;
wherein the difunctional monomer is a functional monomer with vinyl groups at both terminals, specifically at least one of (meth)acrylates, (meth)acrylates containing a metallic element, aliphatic polyesters with vinyl groups at both terminals, Schiff bases and compounds containing disulfide bonds; wherein the Schiff bases and the compounds containing disulfide bonds are specifically: 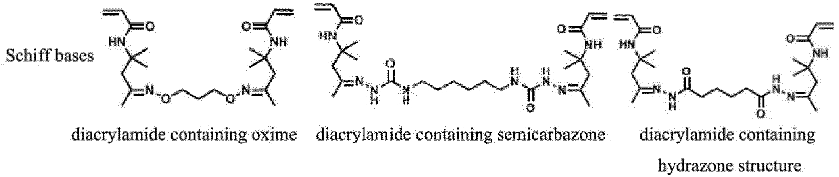 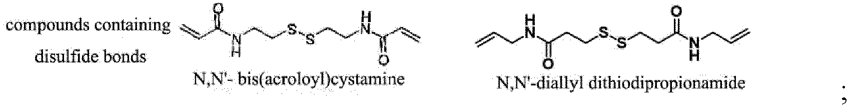
the cyclic monomer is at least one of the following compounds (12) and (19) to (38): (12) 2,2-dimethyl trimethylene cyclic carbonate, (19) 2-methylene-1,3-dioxolane, (20) 2-methylene-4-phenyl-1,3-dioxolane, (21) 2-methylene-4-alkyl-1,3-dioxolane, (22) 2,4-dimethylene-1,3-dioxolane, (23) 2-methylene-1,3-dioxo-4,5-benzocyclopentane, (24) 2-methylene-1,3-dioxane, (25) 2,5-dimethylene-1,3-dioxane, (26) 2-methylene-5-phenyl-1,3-dioxane, (27) 2-methylene-4-alkyl-1,3-dioxane, (28) 2-methylene-1,3-dioxepane, (29) 2-methylene-5-alkyl-1,3-dioxepane, (30) 2-methylene-4,7-dimethyl-1,3-dioxepane, (31) 2-methylene-1,3-dioxo-5,6-benzocycloheptane, (32) 2-methylene-5-phenyl-1,3-dioxepane, (33) 2-ethylidene-1,3-dioxepane, (34) 2-methylene-1,3-dioxo-5-cycloheptene, (35) 2-ethylidene-4-alkyl-1,3-dioxolane, (36) 2-ethylidene-1,3-dioxane, (37) 2-allylidene-4-phenyl-1,3-dioxolane and (38) 2-ethylidene-1,3-dioxo-5,6-benzocycloheptane;
the structural formula of the compounds (12) and (19) to (38) are as follows:

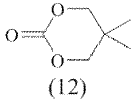

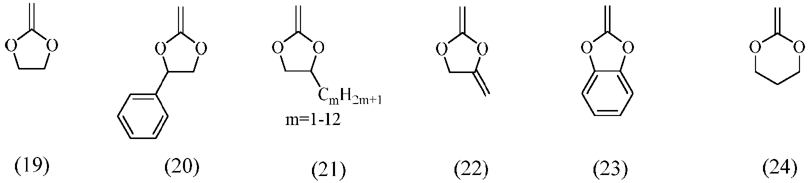

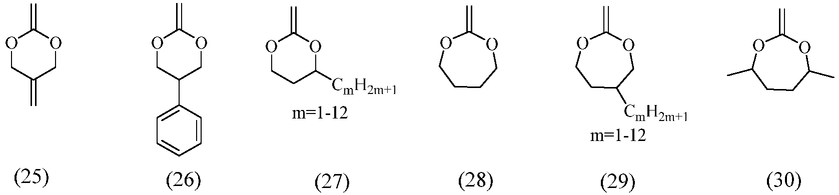

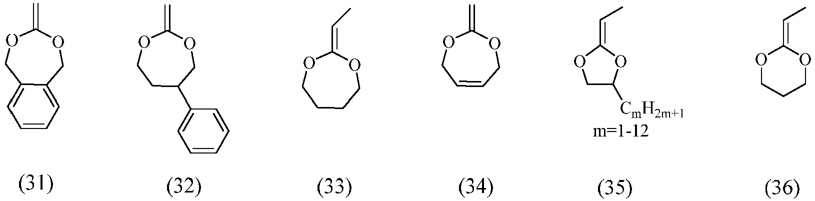

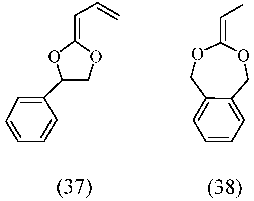

2. The degradable hyperbranched resin according to claim 1,
**characterized in that**:
the vinyl monomer is at least one of (meth)acrylates, (meth)acrylates containing a terminal hydroxyl group, cyclic hydrocarbon (meth)acrylates and polyolefin glycol (meth)acrylate.

3. The degradable hyperbranched resin according to claim 1,
**characterized in that**:
in the vinyl antifouling functional monomer, the vinyl silane ester monomer is at least one of acryloxy trimethyl silane, trimethylsilyl methacrylate, acryloxytriethyl silane, triethylsilyl methacrylate, acryloxy triisopropyl silane, triisopropylsilyl methacrylate, acryloxy triphenyl silane, triphenylsilyl methacrylate, acryloxy tri-n-butyl silane, tri-n-butyl silyl methacrylate, acryloxy t-butyldimethyl silane, t-butyldimethyl silyl methacrylate, acryloxy bis(trimethyl siloxanyl) methyl silane and bis(trimethyl siloxanyl) methyl silyl methacrylate.

4. The degradable hyperbranched resin according to claim 3,
**characterized in that**:
in the vinyl monomer, the vinyl monomer of the (meth)acrylates is at least one of methyl acrylate, ethyl acrylate, 2-methoxy ethyl acrylate, propyl acrylate, isopropyl acrylate, n-butyl acrylate, isobutyl acrylate, t-butyl acrylate, n-octyl acrylate, isooctyl acrylate, lauryl acrylate, octadecyl acrylate, methyl methacrylate, ethyl methacrylate, 2-methoxy ethyl methacrylate, propyl methacrylate, isopropyl methacrylate, n-butyl methacrylate, isobutyl methacrylate, t-butyl methacrylate, n-octyl methacrylate, isooctyl methacrylate, lauryl methacrylate and octadecyl methacrylate; the (meth)acrylates containing a terminal hydroxyl group is at least one of hydroxyethyl acrylate, hydroxypropyl acrylate, hydroxyethyl methacrylate and hydroxypropyl methacrylate; the cyclic hydrocarbon (meth)acrylates are at least one of phenyl acrylate, cyclohexyl acrylate, 1-methylcyclohexyl acrylate, 4-t-butylcyclohexyl acrylate, phenyl methacrylate, cyclohexyl methacrylate, 1-methylcyclohexyl methacrylate and 4-t-butyl cyclohexyl methacrylate; and the polyolefin glycol (meth)acrylates are at least one of polyethylene glycol monoacrylate, polypropylene glycol monoacrylate, polyethylene glycol methacrylate and polypropylene glycol methacrylate.

5. A preparation method for the degradable hyperbranched resin according to any one of claims 1 to 4, **characterized in that**:
under an inert gas or a nitrogen gas atmosphere, under the action of an initiator and a chain transfer agent, taking an organic solvent as a reaction medium, and reacting a vinyl antifouling functional monomer, a difunctional monomer, a cyclic monomer and a vinyl monomer at 70 to 120 °C for 8 to 24 hours, to obtain a degradable hyperbranched resin.

6. The preparation method according to claim 5, **characterized in that**, the degradable hyperbranched resin is prepared from the following components in terms of parts by weight:
| | |
|---|---|
| the cyclic monomer | 30 to 70 parts, |
| the vinyl antifouling functional monomer | 20 to 50 parts, |
| the difunctional monomer | 5 to 30 parts, |
| the vinyl monomer | 0 to 40 parts, |
| the initiator | 3 to 13 parts, |
| the chain transfer agent | 2 to 5 parts, and |
| the organic solvent | 100 to 110 parts. |

7. The preparation method according to claims 5 or 6, **characterized in**
**that**:
the initiator is at least one of phosphonitrile, phosphonitrile salt, phosphonitrile oxide, azobisisobutyronitrile, azobisisovaleronitrile, benzoyl peroxide, di-t-butyl peroxide and t-butyl peroxy-2-ethylhexanoate;
the chain transfer agent is at least one of mercaptan, dithioester, trithioester and 2,4-diphenyl-4-methyl-1-pentene; and
the organic solvent is at least one of hydrocarbons solvent, alcohols solvent, ketones solvent and esters solvent.

8. The preparation method according to claim 7, **characterized in that**:
in the chain transfer agent, the mercaptan is at least one of n-dodecyl mercaptan, t-dodecyl mercaptan, mercapto ethanol, mercapto acetic acid, isooctyl 3-mercapto propionate, 2-ethyl hexyl 3-mercapto propionate and pentaerythritol tetra(3-mercapto propionate); the dithioester is at least one of cumenyl dithiobenzoate, 2-cyano isopropyl dithiobenzoate, methyl dithiobenzoate, phenethyl dithiobenzoate, benzyl dithiobenzoate, phenethyl dithiophenylacetate, S-(Thiobenzoyl)thioglycolic acid, S-acetonyl-O-ethyl dithiocarbonate, S-vinyl propionate-O-ethyl dithiocarbonate, 2-cyanopropyl-4-cyano dithiobenzoate, 2-cyanopropyl-N-methyl-N-(4-pyridine) amino dithiocarbonate, methyl-2-[methyl(4-pyridine) dithiocarbonate] propionate, 4-cyano-4-(thiobenzoyl) pentanoic acid, cyanomethyl methyl(phenyl) carbamodithioate, 2-phenylpropyl-2-dithiobenzene, 1-cyano-1-methyl-4-oxo-4-(2-thio-3-thiazole alkyl) butyl ester, bis(thiobenzoyl) dithioether, tetramethylthiuram disulfide, diethyl xanthogen disulfide, diisopropyl xanthogen disulfide, di-n-butyl xanthogen disulfide and diisobutyl xanthogen disulfide; and the trithioester is at least one of 2-cyano-2-propyldodecyl trithiocarbonate, dibenzyl trithiocarbonate, S-cyanomethyl-S-dodecyl trithiocarbonate, 4-cyano-4-(dodecylsulfanylthiocarbonyl)sulfanylpentanoic acid, bis(carboxymethyl) trithiocarbonate, methyl 2-[[(dodecyl mercapto) thiomethyl]thio]-2-methylbenzoate, 2-((dodecylthio)carbonothioyl)thio)-2-methyl propionic acid and dimethyl trithiocarbonate; and
the organic solvent is at least one of tolyene, xylene, iso-propanol, n-butanol, isobutanol, propylene glycol methyl ether, methyl ethyl ketone, methyl isobutyl ketone, acetone, butanone, cyclohexanone, ethyl acetate and butyl acetate.

9. A use of the degradable hyperbranched resin according to any one of claim 1 to 4 in marine antifouling.

## Patentansprüche

1. Ein abbaubares hyperverzweigtes Harz, **gekennzeichnet durch** eine Struktur eines hyperverzweigten, randomisierten Copolymers, wobei die Monomere des hyperverzweigten, randomisierten Copolymers aus einem vinylhaltigen, funktionellen Antifouling-Monomer, einem bifunktionellen Monomer, einem Vinylmonomer und einem aus einem cyclischen Monomer abgeleiteten Polyestersegment bestehen und es wird aus den folgenden Komponenten in Gewichtsanteilen hergestellt:
| | |
|---|---|
| einem cyclisches Monomer | 1 bis 100 Teile, |
| einem vinylhaltigen, funktionellen Antifouling-Monomer | 10 bis 60 Teile, |
| einem bifunktionellen Monomer | 5 bis 60 Teile, |
| einem Vinylmonomer | 0 bis 70 Teile, |
| einem Initiator | 1 bis 20 Teile, |
| einem Kettenübertragungsmittel | 0.5 bis 10 Teile, |
| und | |
| einem organisches Lösungsmittel | 50 bis 150 Teile; |
wobei das vinylhaltige funktionelle Antifouling-Monomer mindestens eines der folgenden ist
• ein Vinylsilanester-Monomer,
• ein Vinylzinkester-Monomer,
• ein Vinylkupferester-Monomer und
• ein Vorläufer eines Zwitterions vom Betain-Typ mit der Struktur: 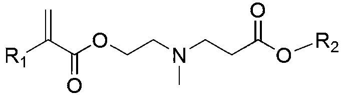
wobei R¹ für H oder CH₃ steht, R² für Alkyl mit einer Anzahl von Kohlenstoffatomen von 1 bis 12, eine methoxyterminierte Polyethylenglykolgruppe oder eine Antifouling-Gruppe steht;
wobei die Antifouling-Gruppe mindestens eine aus einer organischen Antifouling-Gruppe, einer zinkhaltigen Antifouling-Gruppe, einer kupferhaltigen Antifouling-Gruppe und einer siliciumhaltigen Antifouling-Gruppe ist;
wobei die organische Antifouling-Gruppe eine einwertige Gruppe mit Isothiazolinonen, Triclosan, Paeonol, Camptothecin, N-(2,4,6-Trichlorphenyl)maleimid, Brompyrrolnitril, Donaxin, Capsaicin oder Hydroxyindolen als Hauptstruktur ist; wobei die zinkhaltige Antifouling-Gruppe: 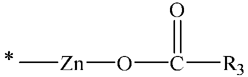 ist, wobei R₃ ein gesättigtes oder ungesättigtes Alkyl oder Cycloalkyl mit einer Anzahl von Kohlenstoffatomen von 1 bis 12 ist, "*" eine Verbindungsstelle darstellt; die kupferhaltige Antifouling-Gruppe R₂ ist: 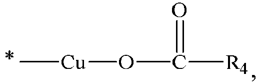 wobei R₄ ein gesättigtes oder ungesättigtes Alkyl oder Cycloalkyl mit einer Anzahl von Kohlenstoffatomen von 1 bis 12 ist, "*" eine Verbindungsstelle darstellt und die siliciumhaltige Antifouling-Gruppe R₂ ist: 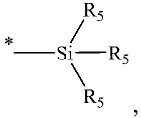 wobei R₅ Alkyl mit einer Anzahl von Kohlenstoffatomen von 1 bis 8 ist, "*" eine Verbindungsstelle darstellt;
wobei das bifunktionelle Monomer ein funktionelles Monomer mit Vinylgruppen an beiden Enden ist, insbesondere mindestens eines von (Meth)acrylaten, (Meth)acrylaten, die ein metallisches Element enthalten, aliphatischen Polyestern mit Vinylgruppen an beiden Enden, Schiffschen Basen und Verbindungen, die Disulfidbindungen enthalten; wobei die Schiffschen Basen und die Verbindungen, die Disulfidbindungen enthalten, insbesondere sind: 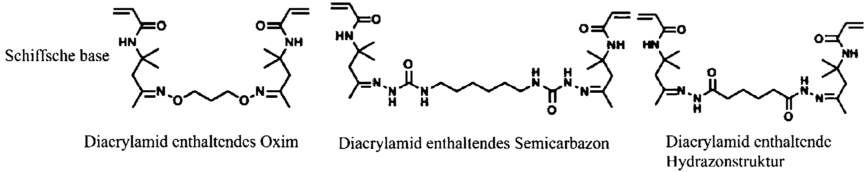 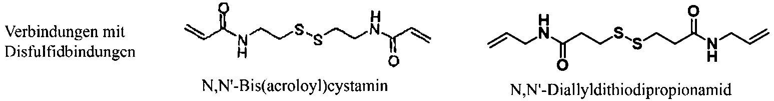
das cyclische Monomer ist mindestens eine der folgenden Verbindungen (12) und (19) bis (38): (12) 2,2-Dimethyl-trimethylen-cyclisches Carbonat, (19) 2-Methylen-1,3-dioxolan, (20) 2-Methylen-4-phenyl-1,3-dioxolan, (21) 2-Methylen-4-alkyl-1,3-dioxolan, (22) 2,4-Dimethylen-1,3-dioxolan, (23) 2-Methylen-1,3-dioxo-4,5-benzocyclopentan, (24) 2-Methylen-1,3-dioxan, (25) 2,5-Dimethylen-1,3-dioxan, (26) 2-Methylen-5-phenyl-1,3-dioxan, (27) 2-Methylen-4-alkyl-1,3-dioxan, (28) 2-Methylen-1,3-dioxepan, (29) 2-Methylen-5-alkyl-1,3-dioxepan, (30) 2-Methylen-4,7-dimethyl-1,3-dioxepan, (31) 2-Methylen-1,3-dioxo-5,6-benzocycloheptan, (32) 2-Methylen-5-phenyl-1,3-dioxepan, (33) 2-Ethyliden-1,3-dioxepan, (34) 2-Methylen-1,3-dioxo-5-cyclohepten, (35) 2-Ethyliden-4-alkyl-1,3-dioxolan, (36) 2-Ethyliden-1,3-dioxan, (37) 2-Allylidene-4-phenyl-1,3-dioxolan und (38) 2-Ethyliden-1,3-dioxo-5,6-benzocycloheptan;
die Strukturformeln der Verbindungen (12) und (19) bis (38) lauten wie folgt:

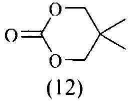

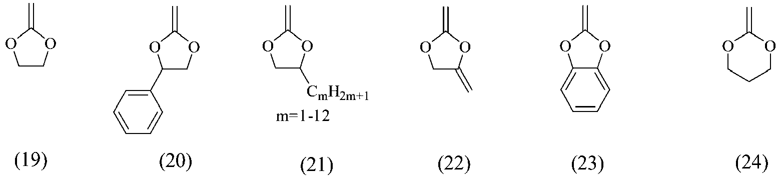

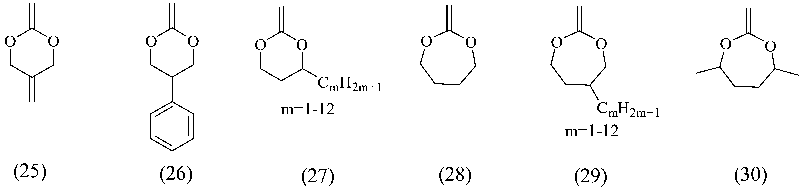

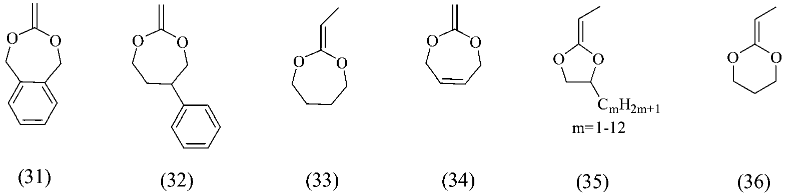

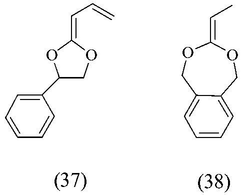

2. Das abbaubare hyperverzweigte Harz gemäß Anspruch 1, **dadurch gekennzeichnet, dass**:
das Vinylmonomer mindestens eines von (Meth)acrylaten, (Meth)acrylaten mit einer endständigen Hydroxylgruppe, cyclischen Kohlenwasserstoff-(Meth)acrylaten und Polyolefinglykol-(Meth)acrylat ist.

3. Das abbaubare hyperverzweigte Harz gemäß Anspruch 1, **dadurch gekennzeichnet, dass**:
in dem vinylhaltigen funktionellen Antifouling-Monomer das Vinylsilanester-Monomer mindestens eines von Acryloxy-Trimethylsilan, Trimethylsilylmethacrylat, Acryloxytriethylsilan, Triethylsilylmethacrylat, Acryloxy-triisopropylsilan, Triisopropylsilylmethacrylat, Acryloxy-triphenylsilan, Triphenylsilylmethacrylat, Acryloxy-tri-n-butylsilan, Tri-n-butylsilylmethacrylat, Acryloxy-t-butyldimethylsilan, t-Butyldimethylsilylmethacrylat, Acryloxy-bis(trimethylsiloxanyl)methylsilan und Bis(trimethylsiloxanyl)methylsilylmethacrylat.

4. Das abbaubare hyperverzweigte Harz gemäß Anspruch 3, **dadurch gekennzeichnet, dass**:
im Vinylmonomer das Vinylmonomer der (Meth)acrylate mindestens eines von Methylacrylat, Ethylacrylat, 2-Methoxyethylacrylat, Propylacrylat, Isopropylacrylat, n-Butylacrylat, Isobutylacrylat, t-Butylacrylat, n-Octylacrylat, Isooctylacrylat, Laurylacrylat, Octadecylacrylat, Methylmethacrylat, Ethylmethacrylat, 2-Methoxyethylmethacrylat, Propylmethacrylat, Isopropylmethacrylat, n-Butylmethacrylat, Isobutylmethacrylat, t-Butylmethacrylat, n-Octylmethacrylat, Isooctylmethacrylat, Laurylmethacrylat und Octadecylmethacrylat ist; die (Meth)acrylate, die eine endständige Hydroxylgruppe enthalten, ist mindestens eines von Hydroxyethylacrylat, Hydroxypropylacrylat, Hydroxyethylmethacrylat und Hydroxypropylmethacrylat; die cyclischen Kohlenwasserstoff-(Meth)acrylate sind mindestens eines von Phenylacrylat, Cyclohexylacrylat, 1-Methylcyclohexylacrylat, 4-t-Butylcyclohexylacrylat, Phenylmethacrylat, Cyclohexylmethacrylat, 1-Methylcyclohexylmethacrylat und 4-t-Butylcyclohexylmethacrylat ; und die Polyolefinglykol-(meth)acrylate sind mindestens eines von Polyethylenglykolmonoacrylat, Polypropylenglykolmonoacrylat, Polyethylenglykolmethacrylat und Polypropylenglykolmethacrylat.

5. Verfahren zur Herstellung des abbaubaren hyperverzweigten Harzes gemäß einem der Ansprüche 1 bis 4, **dadurch gekennzeichnet, dass**:
unter einer Inertgas- oder Stickstoffgasatmosphäre, unter Einwirkung eines Initiators und eines Kettenübertragungsmittels, unter Verwendung eines organischen Lösungsmittels als Reaktionsmedium und durch Umsetzung eines vinylhaltigen funktionellen Antifouling-Monomers, eines bifunktionellen Monomers, eines cyclischen Monomers und eines Vinylmonomers bei 70 bis 120 °C für 8 bis 24 Stunden ein abbaubares hyperverzweigtes Harz erhalten wird.

6. Verfahren zur Herstellung gemäß Anspruch 5, **dadurch gekennzeichnet, dass** das abbaubare hyperverzweigte Harz aus den folgenden Komponenten in Gewichtsteilen hergestellt wird:
| | |
|---|---|
| das cyclische Monomer | 30 bis 70 Teile, |
| das vinylhaltige funktionelle Antifouling-Monomer | 20 bis 50 Teile, |
| das bifunktionelle Monomer | 5 bis 30 Teile, |
| das Vinylmonomer | 0 bis 40 Teile, |
| der Initiator | 3 bis 13 Teile, |
| das Kettenübertragungsmittel | 2 bis 5 Teile |
| und | |
| das organische Lösungsmittel | 100 bis 110 Teile. |

7. Das Herstellungsverfahren gemäß Anspruch 5 oder 6, **dadurch gekennzeichnet, dass**:
der Initiator mindestens einer der folgenden Stoffe ist: Phosphonitril, Phosphonitrilsalz, Phosphonitriloxid, Azobisisobutyronitril, Azobisisovaleronitril, Benzoylperoxid, Di-t-butylperoxid und t-Butylperoxy-2-ethylhexanoat;
das Kettenübertragungsmittel mindestens eines von Mercaptan, Dithioester, Trithioester und 2,4-Diphenyl-4-methyl-1-penten ist; und
das organische Lösungsmittel mindestens eines von Kohlenwasserstofflösungsmittel, Alkohollösungsmittel, Ketonlösungsmittel und Esterlösungsmittel ist.

8. Das Herstellungsverfahren gemäß Anspruch 7, **dadurch gekennzeichnet, dass**:
in dem Kettenübertragungsmittel das Mercaptan mindestens eines von n-Dodecylmercaptan, t-Dodecylmercaptan, Mercaptoethanol, Mercaptoessigsäure, Isooctyl-3-mercapto-propionat, 2-Ethylhexyl-3-mercapto-propionat und
Pentaerythritol-tetra(3-mercapto-propionat) ist; der Dithioester mindestens einer der folgenden Verbindungen ist: Cumenyl-Dithiobenzoat, 2-Cyanoisopropyl-Dithiobenzoat, Methyl-Dithiobenzoat, Phenethyl-Dithiobenzoat, Benzyl-Dithiobenzoat, Phenethyl-Dithiophenylacetat, S-(Thiobenzoyl)thioglykolsäure, S-Acetonyl-O-ethyl-dithiocarbonat, S-Vinylpropionat-O-ethyl-dithiocarbonat, 2-Cyanopropyl-4-cyan-dithiobenzoat, 2-Cyanopropyl-N-methyl-N-(4-pyridin)amino-dithiocarbonat, Methyl-2-[methyl(4-pyridin)dithiocarbonat]propionat, 4-Cyano-4-(thiobenzoyl)pentansäure, Cyanomethylmethyl(phenyl)carbamodithioat, 2-Phenylpropyl-2-dithiobenzol, 1-Cyano-1-methyl-4-oxo-4-(2-thio-3-thiazolalkyl)butylester, Bis(thiobenzoyl)dithioether, Tetramethylthiuramdisulfid, Diethyloxantogendisulfid, Diisopropyloxantogendisulfid, Di-n-butylxanthogendisulfid und Diisobutylxanthogendisulfid; und der Trithioester ist mindestens einer von 2-Cyano-2-propyldodecyltrithiocarbonat, Dibenzyltrithiocarbonat, S-Cyanomethyl-S-dodecyl-trithiocarbonat, 4-Cyano-4-(dodecylsulfanylthiocarbonyl)sulfanylpentansäure, Bis(carboxymethyl)trithiocarbonat, Methyl-2-[[(Dodecylmercapto)thiomethyl]thio]-2-methylbenzoat, 2-((Dodecylthio)carbonothioyl)thio)-2-methylpropionsäure und Dimethyltithiocarbonat; und
das organische Lösungsmittel mindestens eines von Toluol, Xylol, Isopropanol, n-Butanol, Isobutanol, Propylenglykolmethylether, Methylethylketon, Methylisobutylketon, Aceton, Butanon, Cyclohexanon, Ethylacetat und Butylacetat ist.

9. Verwendung des abbaubaren hyperverzweigten Harzes gemäß einem der Ansprüche 1 bis 4 in einem Antifoulingmittel im Marinebereich.

## Revendications

1. Résine hyper-ramifiée dégradable **caractérisée par** une structure d'un copolymère aléatoire hyper-ramifié, où les monomères du copolymère aléatoire hyper-ramifié consistent en un monomère fonctionnalisé par vinyle à activité anti-bioencrassement, un monomère difonctionnel, un monomère vinylique et un segment polyester dérivé d'un monomère cyclique et en ce qu'elle est préparée à partir des composants suivants, en termes de parties en poids :
| | |
|---|---|
| un monomère cyclique | 1 à 100 parties, |
| un monomère fonctionnalisé par vinyle à activité anti-bioencrassement | 10 à 60 parties, |
| un monomère difonctionnel | 5 à 60 parties, |
| un monomère vinylique | 0 à 70 parties, |
| un initiateur | 1 à 20 parties, |
| un agent de transfert de chaîne | 0,5 à 10 parties |
| et | |
| un solvant organique | 50 à 150 parties ; |
où le monomère fonctionnalisé par vinyle à activité anti-bioencrassement est un au moins des suivants :
• un monomère de type ester de vinylsilane,
• un monomère de type ester de vinylzinc,
• un monomère de type ester de vinylcuivre et
• un précurseur de la bétaïne à l'état de zwitterion répondant à la structure suivante : 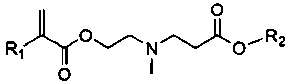
où R¹ représente un H ou un CH₃, R² représente un alkyle à 1 à 12 atomes de carbone, un groupement poly(éthylène glycol) à terminaison méthoxy ou un groupement à activité anti-bioencrassement ;
où le groupement à activité anti-bioencrassement est un au moins parmi un groupement organique à activité anti-bioencrassement, un groupement à activité anti-bioencrassement contenant du zinc, un groupement à activité anti-bioencrassement contenant du cuivre et un groupement à activité anti-bioencrassement contenant une silicone ;
le groupement organique à activité anti-bioencrassement est un parmi des groupements monovalents ayant comme structure principale un composé de la classe des isothiazolinones, le triclosan, le paeonol, la camptothécine, le maléide de N-(2,4,6-trichlorophényle), un bromopyrrole à fonction nitrile, la donaxine, la capsaïcine ou un composé de la classe des hydroxyindoles ;
le groupement à activité anti-bioencrassement contenant du zinc est le suivant : 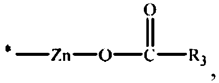 où R₃ représente un alkyle ou un cycloalkyle saturé ou non saturé à 1 à 12 atomes de carbone et « * » représente un site de connexion ;
le groupement à activité anti-bioencrassement contenant du cuivre R₂ est le suivant : 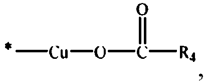 où R₄ représente un alkyle ou un cycloalkyle saturé ou non saturé à 1 à 12 atomes de carbone et « * » représente un site de connexion ; et
le groupement à activité anti-bioencrassement contenant une silicone R₂ est le suivant : 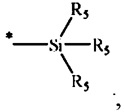 où R₅ représente un alkyle à 1 à 8 atomes de carbone et « * » représente un site de connexion ;
où le monomère difonctionnel est un monomère fonctionnel portant des groupements vinyles aux deux terminaisons, spécifiquement un au moins parmi des (méth)acrylates, des (méth)acrylates contenant un élément métallique, des polyesters aliphatiques portant des groupements vinyles aux deux terminaisons, des bases de Schiff et des composés contenant des ponts disulfures ; les bases de Schiff et les composés contenant des ponts disulfures correspondant spécifiquement aux suivants : 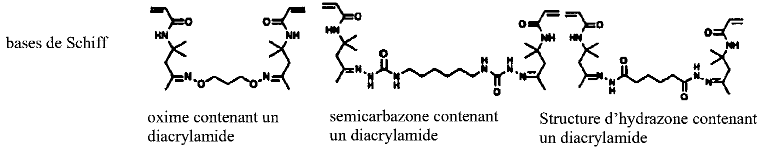 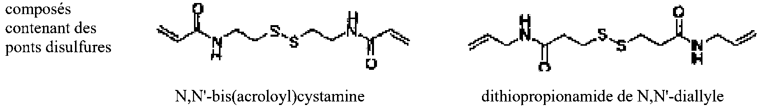
le monomère cyclique est un au moins des composés (12) et (19) à (38) suivants : (12) carbonate de 2,2-diméthyltriméthylène cyclique, (19) 2-méthylène-1,3-dioxolane, (20) 2-méthylène-4-phényl-1,3-dioxolane, (21) 2-méthylène-4-alkyl-1,3-dioxolane, (22) 2,4-diméthylène-1,3-dioxolane, (23) 2-méthylène-1,3-dioxo-4,5-benzocyclopentane, (24) 2-méthylène-1,3-dioxane, (25) 2,5-diméthylène-1,3-dioxane, (26) 2-méthylène-5-phényl-1,3-dioxane, (27) 2-méthylène-4-alkyl-1,3-dioxane, (28) 2-méthylène-1,3-dioxépane, (29) 2-méthylène-5-alkyl-1,3-dioxépane, (30) 2-méthylène-4,7-diméthyl-1,3-dioxépane, (31) 2-méthylène-1,3-dioxo-5,6-benzocycloheptane, (32) 2-méthylène-5-phényl-1,3-dioxépane, (33) 2-éthylidène-1,3-dioxépane, (34) 2-méthylène-1,3-dioxo-5-cycloheptène, (35) 2-éthylidène-4-alkyl-1,3-dioxolane, (36) 2-éthylidène-1,3-dioxane, (37) 2-allylidène-4-phényl-1,3-dioxolane et (38) 2-éthylidène-1,3-dioxo-5,6-benzocycloheptane ;
les formules développées des composés (12) et (19) à (38) étant comme suit :

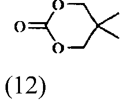

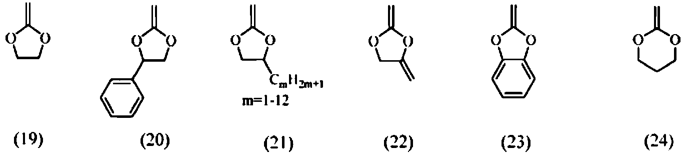

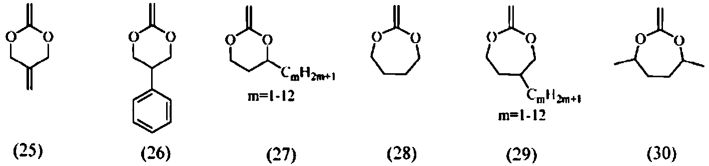

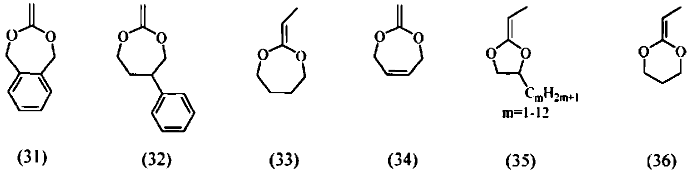

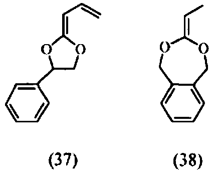

2. Résine hyper-ramifiée dégradable selon la revendication 1, **caractérisée en ce que** : le monomère vinylique est un au moins des suivants parmi (méth)acrylates, (méth)acrylates contenant un groupement terminal hydroxyle, (méth)acrylates hydrocarbonés cycliques et (méth)acrylate de polyoléfine glycol.

3. Résine hyper-ramifiée dégradable selon la revendication 1, **caractérisée en ce que** :
en ce qui concerne le monomère fonctionnalisé par vinyle à activité anti-bioencrassement, le monomère du type ester de vinylsilane est un au moins des suivants parmi acryloxy-triméthylsilane, méthacrylate de triméthylsilyle, acryloxy-triéthylsilane, méthacrylate de triéthylsilyle, acryloxy-triisopropylsilane, méthacrylate de triisopropylsilyle, acryloxy-triphénylsilane, méthacrylate de triphénylsilyle, acryloxy-(tri-n-butyl)silane, méthacrylate de tri-n-butylsilyle, acryloxy-(t-butyldiméthyl)silane, méthacrylate de (t-butyl)diméthylsilyle, acryloxy-bis(triméthylsiloxanyl)méthylsilane et méthacrylate de bis(triméthylsiloxanyl)méthylsilyle.

4. Résine hyper-ramifiée dégradable selon la revendication 3, **caractérisée en ce que** :
en ce qui concerne le monomère vinylique, le monomère vinylique des (méth)acrylates est un au moins des suivants parmi acrylate de méthyle, acrylate d'éthyle, acrylate de 2-méthoxyéthyle, acrylate de propyle, acrylate d'isopropyle, acrylate de n-butyle, acrylate d'isobutyle, acrylate de t-butyle, acrylate de n-octyle, acrylate d'isooctyle, acrylate de lauryle, acrylate d'octadécyle, méthacrylate de méthyle, méthacrylate d'éthyle, méthacrylate de 2-méthoxyéthyle, méthacrylate de propyle, méthacrylate d'isopropyle, méthacrylate de n-butyle, méthacrylate d'isobutyle, méthacrylate de t-butyle, méthacrylate de n-octyle, méthacrylate d'isooctyle, méthacrylate de lauryle et méthacrylate d'octadécyle ;
les (méth)acrylates contenant un groupement terminal hydroxyle sont un au moins des suivants : acrylate d'hydroxyéthyle, acrylate d'hydroxypropyle, méthacrylate d'hydroxyéthyle et méthacrylate d'hydroxypropyle ;
les (méth)acrylates hydrocarbonés cycliques sont un au moins des suivants : acrylate de phényle, acrylate de cyclohexyle, acrylate de 1-méthylcyclohexyle, acrylate de 4-t-butylcyclohexyle, méthacrylate de phényle, méthacrylate de cyclohexyle, méthacrylate de 1-méthylcyclohexyle et méthacrylate de 4-t-butylcyclohexyle ; et les (méth)acrylates de poly(oléfine glycol) sont un au moins des suivants : monoacrylate de poly(éthylène glycol), monoacrylate de poly(propylène glycol) méthacrylate de poly(éthylène glycol) et méthacrylate de poly(propylène glycol).

5. Méthode de préparation de la résine hyper-ramifiée dégradable selon l'une quelconque des revendications 1 à 4, caractérisée en ce qui suit :
utilisation d'un solvant organique comme milieu réactionnel sous atmosphère gazeuse inerte ou sous atmosphère d'azote gazeux et sous l'action d'un initiateur et d'un agent de transfert de chaîne, et mise en réaction d'un monomère fonctionnalisé par vinyle à activité anti-bioencrassement, d'un monomère difonctionnel, d'un monomère cyclique et d'un monomère vinylique à 70 à 120 °C pendant 8 à 24 heures pour obtenir une résine hyper-ramifiée dégradable.

6. Méthode de préparation selon la revendication 5, **caractérisée en ce que** la résine hyper-ramifiée dégradable est préparée à partir des composants suivants, en termes de parties en poids :
| | |
|---|---|
| le monomère cyclique | 30 à 70 parties, |
| le monomère fonctionnalisé par vinyle à activité anti-bioencrassement | 20 à 50 parties, |
| le monomère difonctionnel | 5 à 30 parties, |
| le monomère vinylique | 0 à 40 parties, |
| l'initiateur | 3 à 13 parties, |
| l'agent de transfert de chaîne | 2 à 5 parties et |
| le solvant organique | 100 à 110 parties. |

7. Méthode de préparation selon les revendications 5 ou 6, **caractérisée en ce que** :
l'initiateur est un au moins des suivants parmi phosphonitrile, sel de phosphonitrile, oxyde de phosphonitrile, azobisisobutyronitrile, azobisisovaléronitrile, peroxyde de benzoyle, peroxyde de di-t-butyle et peroxy-2-éthylhexanoate de t-butyle ;
l'agent de transfert de chaîne est un au moins des suivants : mercaptan, dithioester, trithioester et 2,4-diphény1-4-méthyl-1-pentène ; et
le solvant organique est un au moins des suivants : solvants hydrocarbonés, solvants de type alcools, solvants de type cétones et solvants de type esters.

8. Méthode de préparation selon la revendication 7, **caractérisée en ce que** :
en ce qui concerne l'agent de transfert de chaîne, le mercaptan est un au moins des suivants parmi n-dodécyl mercaptan, t-dodécyl mercaptan, mercaptoéthanol, acide mercapto-acétique, 3-mercaptopropionate d'isooctyle, 3-mercaptopropionate de 2-éthylhexyle et tétra(3-mercaptopropionate) de pentaérythritol ;
le dithioester est un au moins des suivants parmi dithiobenzoate de cuményle, dithiobenzoate de 2-cyanoisopropyle, dithiobenzoate de méthyle, dithiobenzoate de phénéthyle, dithiobenzoate de benzyle, dithiophénylacétate de phénéthyle, acide S-(thiobenzoyl)thioglycolique, dithiocarbonate de S-acétonyl-O-éthyle, dithiocarbonate de S-vinylpropionate-O-éthyle, 4-cyanodithiobenzoate de 2-cyanopropyle, aminodithiocarbonate de 2-cyanopropyl-N-méthyl-N-(4-pyridine), propionate de méthyl-2-[dithiocarbonate de méthyl(4-pyridine)], acide 4-cyano-4-(thiobenzoyl)pentanoïque, carbamodithioate de cyanométhyl-méthyl(phényle), 2-phénylpropyl-2-dithiobenzène, ester butylique de 1-cyano-1-méthyl-4-oxo-4-(2-thio-3-thiazol-alkyle), bis(thiobenzoyl) dithioéther, disulfure de tétraméthylthiurame, disulfure de diéthylxanthogène, disulfure de diisopropylxanthogène, disulfure de di-n-butylxanthogène et disulfure de diisobutylxanthogène ; et
le trithioester est un au moins des suivants parmi trithiocarbonate de 2-cyano-2-propyldodécyle, trithiocarbonate de dibenzyle, trithiocarbonate de S-cyanométhyl-S-dodécyle, acide 4-cyano-4-(dodécylsulfanylthiocarbonyl)sulfanylpentanoïque, trithiocarbonate de bis(carboxyméthyle), 2-[[(dodécylmercapto)thiométhyl]thio]-2-méthylbenzoate de méthyle, acide 2-((dodécylthio)carbonothioyl)thio)-2-méthylpropionique et trithiocarbonate de diméthyle ; et
le solvant organique est un au moins des suivants parmi : tolyène, xylène, isopropanol, n-butanol, isobutanol, éther méthylique du propylène glycol, méthyléthylcétone, méthylisobutylcétone, acétone, butanone, cyclohexanone, acétate d'éthyle et acétate de butyle.

9. Utilisation de la résine hyper-ramifiée dégradable selon l'une quelconque des revendications 1 à 4 dans la protection contre le bioencrassement marin.
